# EUROPEAN PATENT APPLICATION

(11) **EP 4 738 064 A1**
(43) Date of publication of application: **06.05.2026**
(21) Application number: 25210947.5
(22) Date of filing: 24.10.2025
(51) Int. Cl.: G06F 1/32, H04W 52/04

(54) **WIRELESS ACCESS POINT DEVICE AND METHOD FOR POWER MANAGEMENT**

(30) Priority: 30.10.2024 US 202418931668
(71) Applicant: TP-Link Systems Inc., Irvine, California 92618 (US)
(72) Inventor: HU, Xinxin, Shenzhen, 518000 (CN)
(74) Representative: Marks & Clerk LLP

(57) **Abstract**

Disclosed is a wireless access point device, including one or more radio chips, configured to transmit and receive electromagnetic waves for wireless communication on one or more frequency bands, wherein the one or more radio chips correspond to different frequency bands respectively; a power supply module, configured to supply power to the one or more radio chips; and a control module, configured to disable, in response to at least one frequency band of the one or more frequency bands being turned-off, the power supplied by the power supply module the power supplied by to at least one radio chip corresponding to the turned-off band.

## Description

### CROSS REFERENCE TO RELATED APPLICATIONS

This application claims the benefit of U.S. Non-Provisional Patent Application No. 18/931,668, filed on October 30, 2024 and titled "WIRELESS ACCESS POINT DEVICE AND METHOD FOR POWER MANAGEMENT." The entire disclosure of the aforementioned application is incorporated by reference as part of the disclosure of this application.

### TECHNICAL FIELD

The present disclosure relates to wireless communication, and more specifically, to a wireless access point (AP) device and a method for power management of a wireless AP device.

### BACKGROUND

In a wireless network, a wireless AP serves as a node for client devices (such as mobile phones, laptop computers, personal Digital Assistant (PDA), tablet computers, wearable devices, and any other equipment supporting wireless communication) to access wired networks, and provides a coverage of wireless signals to support wireless communication on one or more corresponding frequency bands. Such a coverage of wireless signals corresponds to a wireless Basic Service Set (BSS), in which the wireless AP is the central point (also called "hot spot") of the coverage, and all wireless signals in this coverage can be exchanged with each other via the wireless AP, so that the client devices are movable within the coverage of wireless signals provided by the wireless AP, without being limited a specific geographical location by a wired connection. Also, a plurality of BSSs can be jointly combined into an Extended Service Set (ESS), and thus achieving seamless roaming of the client devices across different BSSs.

Due to these excellent characteristics, wireless AP devices can provide great convenience for people's production and living, and therefore have been widely used in both home network and public network. Nevertheless, there are still limitations to power management of such wireless AP devices.

Specifically, a wireless AP device communicates with client devices by electromagnetic waves on one or more frequency bands as transmission medium. Typically, the most common frequency bands for the wireless AP device include, for example, 2.4G hertz (Hz) band, 5G1 Hz band (i.e., 5G lower frequency band), 5G2 Hz band (i.e., 5G higher frequency band) and 6G Hz band, and these electromagnetic waves on different frequency bands are transmitted and received by one or more wireless radio chips of the wireless AP device respectively, and thus causing a power consumption of the wireless AP device. Although in order to save power, some existing power management methods may involve turning-off an interface corresponding to an unused frequency band, by which the wireless AP device merely stops transmitting and receiving packets on the unused frequency band, while the corresponding radio chip is still powered, and thus the effect of power saving is limited. On the other hand, for frequency bands in use, regardless of the condition of network loads, a wireless AP device is configured with a fixed configuration for a maximum performance or an initial configuration, without employing a dynamic adjustment mechanism for the configuration of the wireless AP device, and thus resulting in a further power consumption.

It follows that there is a need for an improved power management method of a wireless AP device.

As used herein, the "wireless AP device" broadly refers to a variety of wireless AP-like products, including not only a simple wireless access point, but also a wireless router including wireless gateways and wireless bridges, a repeater, a base station, or the like. In some applications, AP is also referred to as range extender, mesh point or network node.

### SUMMARY

In view of at least the above problems, the present disclosure provides embodiments of a wireless AP device and a method for power management of a wireless AP device.

According to an aspect of the present disclosure, there is provided a wireless AP device, comprising one or more radio chips, configured to transmit and receive electromagnetic waves for wireless communication on one or more frequency bands, wherein the one or more radio chips correspond to different frequency bands respectively; a power supply module, configured to supply power to the one or more radio chips; and a control module, configured to disable, in response to at least one frequency band of the one or more frequency bands being turned-off, the power supplied by the power supply module to at least one radio chip corresponding to the turned-off band.

In some embodiments, the power supply module comprises one or more IO interfaces connected with the control module; and the control module is further configured to associate the one or more IO interfaces with power supply states of the power supply module, and disable the power supplied by the power supply module to the at least one radio chips corresponding to the turned-off band by setting logic levels at the one or more IO interfaces.

In some embodiments, the control module is further configured to perform, in response to a request to turn-off the one or more frequency bands, a first operation to unbind the at least one radio chip with a driver thereof; and after the first operation is performed, disable the power supplied by the power supply module to the at least one radio chip corresponding to the turned-off band.

In some embodiments, the first operation is performed by calling a script containing an unbind instruction.

In some embodiments, the control module is further configured to monitor client devices associated with a turned-on frequency band; and transmit a message to recommend turning-off the frequency band, in response to that the frequency band is not associated with any client device.

In some embodiments, the control module is further configured to enable, in response to at least one frequency band of the one or more frequency bands being turned-on, the power supply module to supply power to at least one radio chip corresponding to the turned-on bands.

In some embodiments, the control module is configured to associate the one or more IO interfaces with power supply states of the power supply module; enable the power supplied by the power supply module to the at least one radio chip corresponding to the turned-on bands by setting logic levels at the one or more IO interfaces, in response to a notification for a second operation to bind the at least one radio chip corresponding to the turned-on band with a driver thereof.

In some embodiments, the control module is further configured to monitor a load condition corresponding to each of the turned-on bands, wherein the load condition includes one or more of a number of associated client devices, channel utilization rate or transmission rate; and configure the wireless AP device with an optimal configuration set for the each of the turned-on bands dynamically according to variation of the monitored load condition, wherein the optimal configuration set includes a set of configuration parameters corresponding to the minimum power consumption under a given load condition.

In some embodiments, the control module is further configured to determine the optimal configuration parameter set to be used, based on a mapping table of load conditions and configuration parameters, wherein the mapping table includes a mapping relationship between different load conditions and respective optimal configuration sets.

In some embodiments, the control module is further configured to in response to the monitored load condition is lower than a load condition corresponding to a currently used optimal configuration set for a period of time, configure the wireless AP device with an updated optimal configuration set corresponding to the monitored load condition; and in response to the monitored load condition is close to the highest load condition to which the currently used optimal configuration set is applicable, configure the wireless AP device with an updated optimal configuration set corresponding to a next higher level of load condition in the mapping table.

According to another aspect of the present disclosure, there is provided a method for power management of a wireless AP device, wherein the wireless AP device comprises one or more radio chips, configured to transmit and receive electromagnetic waves for wireless communication on one or more frequency bands, wherein the one or more radio chips correspond to different frequency bands respectively, and a power supply module, configured to supply power to the one or more radio chips, the method comprises disabling, in response to at least one frequency band of the one or more frequency bands being turned-off, the power supplied by the power supply module to at least one radio chip corresponding to the turned-off band.

According to yet another aspect of the present disclosure, there is provided a computer program product for power management of a wireless AP device, wherein the wireless AP device comprises one or more radio chips, configured to transmit and receive electromagnetic waves for wireless communication on one or more frequency bands, wherein the one or more radio chips correspond to different frequency bands respectively, and a power supply module, configured to supply power to the one or more radio chips, and the computer program product comprising a non-transitory computer readable storage medium having program instructions embodied therewith, the program instructions executable by a processor of the wireless AP device to cause the wireless AP device to: disable, in response to at least one frequency band of the one or more frequency bands being turned-off, the power supplied by the power supply module to at least one radio chip corresponding to the turned-off band.

According to yet another aspect of the present disclosure, there is provided a control module for a wireless AP device, wherein the wireless AP device comprises one or more radio chips, configured to transmit and receive electromagnetic waves for wireless communication on one or more frequency bands, wherein the one or more radio chips correspond to different frequency bands respectively, the control module is configured to disable, in response to at least one frequency band of the one or more frequency bands being turned-off, the power supplied by a power supply module to at least one radio chip corresponding to the turned-off band.

At least based on the above aspects and embodiments of the present disclosure, an improved mechanism for power management of a wireless AP device comprising one or more radio chips corresponding to different frequency bands respectively can be realized.

By the improved mechanism for power management of a wireless AP device proposed in the present disclosure, when a certain frequency band is turned-off, the power supply to a radio chip corresponding to the turned-off frequency band is disabled, rather than only the transmission of electromagnetic waves is stopped, and thus significantly reducing the power consumption of a wireless AP device. Also, when one or more frequency bands are turned-on, the configuration of the wireless AP equipment can be dynamically adjusted depending on the variation of load condition, thereby effectively saving power while maintaining a communication with an acceptable quality.

### BRIEF DESCRIPTION OF DRAWINGS

The above and other features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation to the present disclosure. In the drawings, unless otherwise explicitly indicated, the same reference numerals refer to the same components, steps or elements.
Fig. 1 is a schematic diagram illustrating an exemplary application scenario according to an embodiment of the present disclosure;
Fig. 2 is a schematic diagram illustrating an exemplary topology of a PCIe system according to an embodiment of the present disclosure;
Fig. 3 shows an exemplary block diagram of a wireless AP device according to an embodiment of the present disclosure;
Figs. 4 and 5 are schematic flowcharts illustrating methods for power management of a wireless AP device according to an embodiment of the present disclosure.
Figs. 6 and 7 are schematic flowcharts illustrating methods for dynamic adjustment of a configuration of a wireless AP device according to an embodiment of the present disclosure.
Fig. 8 is a schematic block diagram of a wireless AP device according to an embodiment of the present disclosure.

### DETAILED DESCRIPTION

The technical solution of the present disclosure will be clearly and completely described below in conjunction with accompanying drawings. The described embodiments are part of embodiments of the present disclosure, but not all of them. Based on the embodiments in the present disclosure, all other embodiments acquired by an ordinary skilled in the art without making any creative efforts fall within the scope of protection of the present disclosure.

Some of the drawings may not depict all the components of a given method, device and system. Like reference numerals may be used to denote like features throughout the specification and drawings.

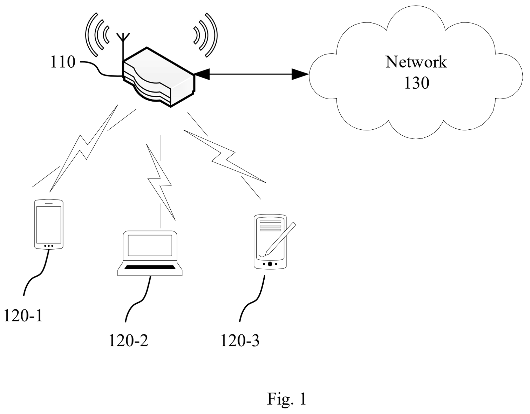

Fig. 1 is a schematic diagram illustrating an exemplary application scenario according to an embodiment of the present disclosure.

Referring to Fig. 1, a wireless AP device 110 may communicate wirelessly with client devices (also referred to as STAs) 120-1 through 120-3 over a wireless channel and using one or more Wi-Fi protocols, such as IEEE 802.11ac, 802.11ax, 802.11bz, and 802.11be. As mentioned above, a wireless AP device 110 may access network 130, such as wide area work (WAN), local area network (LAN), metropolitan area network, peer-to-peer, and the like, via a wired channel such as a fiber, and provides network access to the client devices 120-1, 120-2 and 120-3 by transmitting and receiving electromagnetic waves on one or more frequency bands. Therefore, software and hardware designs are required for the wireless AP device to support a capability of wireless communication.

Generally, a wireless AP device can use a bus system-based structure to electrically connect various components such as radio chips, power supply chips and one or more modules in the wireless AP device, thus allowing data transmission and resource allocation based on a defined bus protocol. For example, PCIe (Peripheral Component Interconnect Express), as a high-bandwidth and low latency extended bus technology, can be used in the software and hardware designs for the wireless AP device. The PCIe adopts a structure of a serial bus and a point-to-point connection, that is, components are connected with each other directly on the bus, which means that PCIe-based components (i.e., PCIe devices) have their own dedicated channels for communication, and therefore, as compared with the traditional parallel bus structure, the PCIe technology can avoid a bus contention and conflict, thus further improving the efficiency and reliability of data transmission.

In embodiments of the present disclosure, interfaces supporting PCIe (i.e., PCIe interfaces) can be deployed in one or more radio chips and a control module of a wireless AP device to realize a high-speed interconnection therebetween via the PCIe interfaces. Hereinafter, an improved mechanism for power management according to embodiments of the present disclosure will be described in the context of a wireless AP device based on the PCIe system. It can be understood that the improved mechanism of the present disclosure is also applicable to wireless AP device based on other interface or bus technologies.

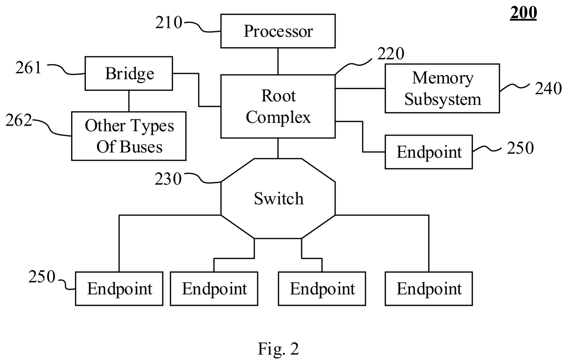

Fig. 2 is a schematic diagram illustrating an exemplary topology of a PCIe system according to an embodiment of the present disclosure.

Referring to Fig. 2, a topology of a PCIe system 200 comprises a processor 210, a root complex 220, a switch 230, a memory subsystem 240, endpoints 250, as well as optionally a bridge 261 and other types of buses 262. It should be noted that the shown topology is only exemplary, and the PCIe system 200 may comprise additional elements in addition to the components as shown.

The root complex 220 is the starting point of the topology, and couples the processor 210 (such as Central Processing Unit, CPU) and the memory subsystem 240 to manage activities in the PCIe system 200, and also connects to a plurality of endpoints 250 directly and indirectly via a switch 230. The switch 230 is used to realize the routing and exchange of data in the PCIe system 200, and the endpoints 250, as terminal components, in the PCIe system 200 can be directly or indirectly coupled to the root complex 220 through the switch 230. The switch 230 can also be connected to other switches to expand the structure of the PCIe system 200. In some implementations, the topology of the PCIe system 200 also comprises a bridge 261 and other types of buses 262, wherein the bridge 261 can connect other types of buses 262 that are different from the PCIe bus, such as PCI or PCI-X buses, to the PCIe system 200, in order to achieve compatibility between different bus standards and communication with traditional endpoints.

In a wireless AP device based on the PCIe system, a CPU and memory components (e.g., including a cache and/or a random access memory) of a control module can serve as the processor 210 and the memory subsystem 240 respectively, and these components are coupled to the PCIe bus by the root complex 220 to control the communication and resource allocation of each of the endpoints 250, such as one or more radio chips for transmitting and receiving electromagnetic waves on different frequency bands and a power supply module for supplying power to the radio chips. For example, the interfaces of the power supply module can be connected to the PCIe bus through the bus 262 via the bridge 261, to be controlled by the control module.

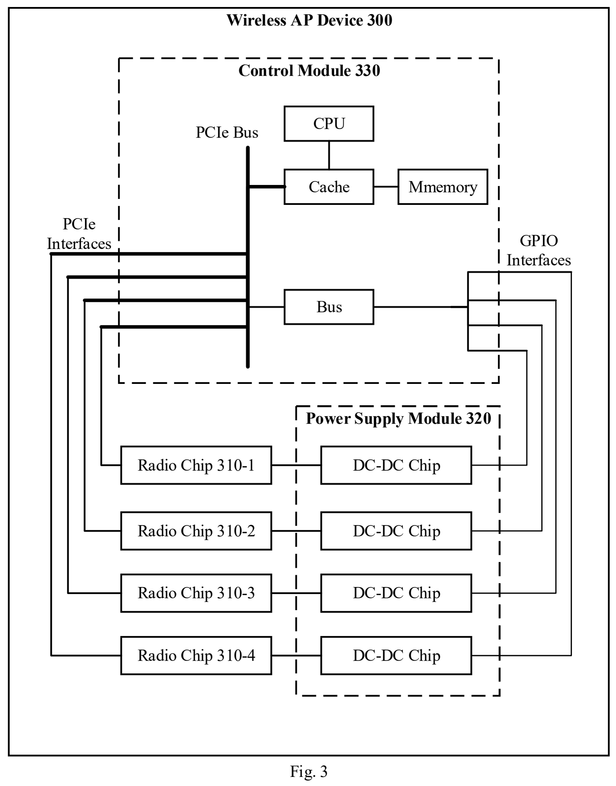

Fig. 3 shows an exemplary block diagram of a wireless AP device according to an embodiment of the present disclosure. A wireless AP device 300 as shown in Fig. 3 can be based on the PCIe system 200 as shown in Fig. 2, and can provide wireless communication for the client devices 120-1, 120-2 and 120-3 to access the network 130 as shown in Fig. 1.

Referring to Fig. 3, the wireless AP device 300 can comprise four radio chips 310-1, 310-2, 310-3, and 310-4 (hereinafter are collectively referred to as radio chip(s) 310), a power supply module 320 configured to supply power to the radio chips 310, and a control module 330 connected with the radio chips 310 and the power supply module 320, for example, via a PCIe bus. The radio chips 310 are configured to transmit and receive electromagnetic waves for wireless communication on different frequency bands, such as 2.4G Hz band, 5G1 Hz band, 5G2 Hz band, and 6G Hz band, respectively. In some implementations, the control module 330 can be implemented as a host System on a Chip (SoC), one or more processors or control units, a circuitry with integrated one or more processors or control units, or the like. It should be noted that the shown topology is only exemplary, and the wireless AP device 300 may comprise additional elements in addition to the components as shown.

As mentioned above, in order to further reduce the power consumption of a wireless AP device, when a certain frequency band (e.g., 2.4 GHz) is turned-off, in addition to stopping the electromagnetic wave transmission of an radio chip 310-1 corresponding to the turned-off 2.4 GHz band, the power supply to the radio chip 310-1 is also turned-off, that is to say, the power supplied by the power supply module 320 to the radio chip 310-1 is disabled, in response to the frequency band being turned-off. Specifically, the control module 330, such as a host SoC, of the wireless AP device 300 is configured to disable, in response to at least one frequency band of the one or more frequency bands being turned-off, the power supplied by the power supply module 320 to at least one radio chip 310 corresponding to the turned-off band.

In some implementations, the power supply module 320 can be implemented as an integrated module as shown in the Fig. 3; alternatively, the power supply module 320 can be implemented as four separate DC-DC chips to supply power to the four radio chips 310 respectively. In some implementations, a radio chip 310 can be configured to transmit and receive electromagnetic waves on more than one frequency band, and in this case, the power supplied by the power supply module 320 to such a radio chip 310 can be disabled, in response to all the frequency bands corresponding to the radio chip 310 being turned-off. Also, a radio chip 310 be a SoC (also referred to as "radio SoC") and the number of radio chips 310 is not limited to four, for example, it can be more or less.

The power supply state of the power supply module 320 can be defined by programming IO interfaces supporting interface control functions in the control module 330, so as to realize the power management of the radio chip 310 by utilizing existing hardware resources in combination a software design. According to an embodiment of the present disclosure, the power supply module 320 comprises one or more IO interfaces connected with the control module 330, and the control module 330 can be configured to associate the one or more IO interfaces with power supply states of the power supply module, and disable the power supplied by the power supply module 320 to the one or more radio chips 310 corresponding to the turned-off band by setting logic levels at the one or more IO interfaces.

As shown in the Fig. 3, in terms of hardware, the power supply module 320 comprises four interfaces, for example, General-Purpose Input/Output (GPIO) interfaces supporting the GPIO control, which are connected with corresponding GPIO interfaces the control module 330 respectively. The GPIO interfaces can be aggregated to a peripheral bus (corresponding to the bus 262 in Fig. 2) and connected to the PCIe bus of the AP device 300 via the bridge 261 in Fig. 2, so as to be controlled by the control module 330.

In terms of software, taking an Unix-like (e.g., Linux) operating system as an example, the control module 330 can utilize an existing software module for power management in the operating system, such as a regulator module, to control power supply states of the power supply module 320. For example, the control module 330 can create a regulator node in the regulator module, by associating one or more IO interfaces (e.g., the GPIO interface) with the power supply states of the power supply module 320, including power supply enabled and power supply disabled, so that the control module 330 can control the power supply states of the power supply module 320 through the regulator node. In this manner, the control module 330 can associate one or more IO interfaces with power supply states of the power supply, and the power supplied by the power supply module 320 to one or more the radio chips 310 can be disabled or enabled by setting logic levels at the GPIO interfaces through the regulator module. That is to say, such an association correlate logic levels at one or more GPIO interfaces with the power supply by the power supply module 320, such that the control module 330 can disable the power supplied by the power supply module 320 to the radio chip(s) 310 associated with the GPIO interface(s), by setting a logic level at the respective GPIO interface(s). For example, if a logic level at the GPIO interface is set to a high level (i.e., logic high), the regulator module of the control module 330 enables the power supply module 320 to supply power to the one or more radio chips 310; and if a logic level at the GPIO interface is set to a low level (i.e., logic low), the regulator module of the control module 330 disable the power supplied by the power supply module 320 to the one or more radio chips 310, or vice versa.

Also, in order to realize the association of the turn-off state of a frequency band with the power management operation of a corresponding PCIe device in a device tree, a synchronization mechanism can be established through a software design to ensure that the corresponding PCIe device, for example, an radio chip 310 corresponding to the turned-off band, stops transmitting and receiving the electromagnetic waves in response to a request to turn-off the frequency band, followed by a disabling of the power supply for the radio chip 310. According to an embodiment of the present disclosure, in order to disable the power supplied by the power supply module 320 to the at least one radio chip 310, the control module 330 can be configured to in perform, in response to a request to turn-off the one or more frequency bands, a first operation to unbind the at least one radio chip 310 with a driver thereof, wherein the first operation is performed by calling a script containing an unbind instruction in response to the request, and after the first operation is performed, disable the power supplied by the power supply module 320 to the at least one radio chip 310. The first operation to unbind a radio chip 310 with a driver thereof can include removing the radio chip 310 and a driver thereof from the device tree, or any other operation of removing the binding of the radio chip 310 and the driver thereof.

Specifically, when a request (such as an HTTP request) to turn-off a certain frequency band (e.g., 2.4 GHz) is received from the front-end of a user interface, the back-end server will initial a process of turning-off the frequency band, followed by an operation to unbind an radio chip 310-1 corresponding to the turned-off frequency 2.4 GHz band with a driver thereof, for example, the operation can be implemented by a script containing an unbind instruction (such as by a shell script in Linux system) in response to the request. In this manner, the unbind operation for the radio chip 310-1 can be automatically executed after the original process of turning-off the frequency band in response to the request. In some implementations, the operation to unbind a radio chip with a driver thereof can also be implemented by any other appropriate means such as system call.

In addition, a software module can be created in the operating system to establish the synchronization of the unbind/bind operation and power supply state. For example, a kernel module (e.g.,PCIe_regulator.ko) connected to the operating system kernel can be used for managing driver states of the PCIe devices, and this kernel module can be configured to receive a notification for the unbind/bind operation and control the power management module (e.g., the regulator module) to disable or enable the power supplied by the power supply module 320 to the radio chip 310 respectively in response to the received notification.

In specific, if the software module receives a remove notification for the unbind operation, it informs the driver to release the related resources for the 2.4 GHz frequency band, and calls functions such as pci_stop_root_bus and pci_remove_root_bus to uninstall the driver of the radio chip 310-1 as well as device_unregister to remove the radio chip 310-1 from the device tree. In response to the execution of the unbind instruction, the software module can call a function such as regulator_disable of the regulator module, to disable the power supply to the radio chip 310-1, for example, by setting the GPIO in the regulator to a low level to disable the power supplied by the power supply module 320 to the radio chip 310-1.

In addition, the turning-off of a specific frequency band may depend on the usage of that frequency band. For example, if a frequency band is not associated with any client device, which indicates that this frequency band is not used, then the frequency band can be turned-off, and thereby allowing an implementation of the above power management method. According to an embodiment of the present disclosure, the control module 330 is further configured to monitor client devices associated with a turned-on frequency band; and in response to that the frequency band is not associated with any client device, for example, by monitoring that the frequency band is not associated with any client device, transmit a message to recommend turning-off the frequency band, such as a prompt message to suggest user to turn-off one or more frequency bands. In this way, the user can turn off the unused frequency band according to the usage of frequency bands, and cause the power supply of the radio chip 310 to be disabled, and thereby reducing power consumption without affecting wireless communication.

In some implementations, the above monitoring of client devices can be realized by a monitoring module of the wireless AP device 300. For example, the monitoring module is configured to periodically monitor client devices associated with each frequency band and other load conditions, such as a channel utilization and a transmission rate of the frequency band. Alternatively, one or more frequency bands can also be turned-off for other reasons, such as user preference or interference avoidance, even if the frequency band to be turned-off is not idle. In this case, the power supplied to the corresponding radio chip is also cut off in response to the frequency band being turned-off, and thereby effectively saving power.

Also, according to an embodiment of the present disclosure, the control module 330 is further configured to enable, in response to at least one frequency band of the one or more frequency bands being turned-on, the power supply module 320 to supply power to at least one in-use radio chip 310 corresponding to the turned-on bands. Correspondingly, for enabling the power supply to the radio chip 310, as described above, in response to that the kernel module receives a probe notification for a bind operation, that is, an operation to bind an radio chip 310 corresponding to the turned-on frequency band with a driver thereof, and a function such as regulator_enbale of the regulator module is called to power on the radio chip 310 in response to the probe notification, then functions such as pci_device_add and pci_enable_device are called to register a driver of the in-use radio chip 310 corresponding to the frequency band and install the in-use radio chip 310 on the bus of the operation system, and finally the related resources for corresponding frequency band is allocated to the in-use radio chip 310.

Therefore, as described above, a synchronization mechanism among the turn-on/off state of frequency band, the bind/unbind operation of components and the control of power supply state can be established by hardware and software designs, such that the power supply to the radio chip 310 can be disabled/enabled respectively in response to the turn off/on state of one or more frequency bands. In addition, such a power management method can be also be used in conjunction with automation functions such as timing switch of the wireless AP device, and thereby achieving an intelligent power control mechanism.

On the other hand, when one or more frequency bands are turned-on, the present disclosure also provides a method of dynamically adjusting the configuration of wireless AP device according to different load conditions representing a load-related condition of the network. According to an embodiment of the present disclosure, the control module 330 is further configured to monitor a load condition corresponding to each of the turned-on bands; and configure the wireless AP device with an optimal configuration set for the each of the turned-on bands dynamically according to variation of the monitored load condition, wherein the optimal configuration set includes a set of configuration parameters corresponding to the minimum power consumption under a given load condition.

In some implementations, the load condition can include one or more of a number of associated client devices (C), channel utilization rate (U) or transmission rate (R). For example, the load condition can be defined as a combination of the number of associated client devices, channel utilization rate and transmission rate, and be represented as (C, U, R). The control module 330 can configure a set of configuration parameters corresponding to the minimum power consumption for the wireless AP device, according to variation of the monitored load condition (C, U, R). In specific, if the monitored load condition corresponding to a turned-on band decreases, that is, the load on the turned-on band is reduced, such as the of client devices (C) decreases, the channel utilization rate (U) decreases, or the transmission rate (R) increases, the control module 330 can update the configuration parameters to reduce the configuration for the turned-on band accordingly. On the contrary, if the monitored load condition increases, that is, the load on the frequency band is increased, the control module 330 can update the configuration parameters to upgrade the configuration for the turned-on band accordingly. In a PCIe system, the configuration parameters can include but be not limited to a number of PCIe lanes to adjust a number of lanes used by PCIe interface, a PCIe swing to adjust the voltage range of PCIe signal, and a PCIe protocol mode such as PCIe version 1.0 to 5.0, and the like. In this manner, the wireless AP device can be configured with an optimal configuration set for the each of the turned-on bands dynamically according to variation of the monitored load condition.

In order to determine the optimal configuration parameter set to be used, according to an embodiment of the present disclosure, the control module 330 is configured to determine the optimal configuration parameter set, based on a mapping table of load conditions and configuration parameters, wherein the mapping table includes a mapping relationship between different load conditions and respective optimal configuration sets.

Continuing with the above-described embodiment, Table 1 provides an exemplary mapping table, in which a mapping relationship between each load condition and respective configuration parameters are provided.

**Table 1**

| Load Condition | PCIe Lane Number | PCIe Swing | PCIe Protocol Mode |
|---|---|---|---|
| C1, U1, R1 | X1 | Y1 | Z1 |
| C2, U2, R2 | X2 | Y2 | Z2 |
| C3, U3, R3 | X3 | Y3 | Z3 |
| ... | ... | ... | ... |

In some implementations, one optimal configuration set can be applicable to more than one load condition in the mapping table. For example, for the case where C1>C2 but U1<U2, although these two load conditions are different, both of the load conditions may correspond to the same optimal configuration set, which means that the optimal configuration set can be used to achieve the minimum power consumption under the both load conditions.

In order to obtain such a mapping table of load conditions and configuration parameters, according to an embodiment of the present disclosure, the control module 330 is configured to obtain multiple sets of configuration parameters corresponding to power consumptions by adjusting a set of configuration parameters from the highest configuration to lower configurations for one given load condition, until the adjusted set of configuration parameters does not meet the given load condition; determine, among the multiple sets of configuration parameters, a set of configuration parameters corresponding to the minimum power consumption under the given load condition as the optimal configuration set for the given load condition; and determine optimal configuration sets respectively for different load conditions to obtain the mapping table including the mapping relationship between the different load conditions and respective optimal configuration sets.

For example, in a case where all of the one or more frequency bands are turned-on, under a given load condition, configuration parameters such as the PCIe lane number, the PCIe swing and the PCIe protocol mode as mentioned above are adjusted gradually from the default highest configuration to lower configuration, and the power consumption corresponding to each adjusted configuration parameter is measured and recorded until the given wireless load condition cannot be maintained by using the adjusted configuration parameters, such as the disassociation of a client device or decreasing of the transmission rate. In this way, the power consumption of different sets of configuration parameters under the given load condition can be obtained, as shown in the following Table 2.

**Table 2**

| Load Condition | PCIe Lane Number | PCIe Swing | PCIe Protocol Mode | Power Consumption |
|---|---|---|---|---|
| C1, U1, R1 | Xa | Ya | Za | P1 |
| C1, U1, R1 | Xb | Yb | Zb | P2 |
| ... | ... | ... | ... | |

The above-mentioned process of recording the power consumption can be an independent processing procedure, or can be carried out with the transmitting and receiving of traffic data without an additional measurement process. In addition, the method for obtaining the mapping table is not limited to the above example, for example, the mapping table can also be obtained by predefining each optimal configuration set for each load condition based on empirical data or historical data.

The above tables can be stored as a configuration file. When configuring the wireless AP device, the configuration file can be used by the control module 330 to select appropriate configuration parameters according to the load conditions. According to an embodiment of the present disclosure, the control module 330 is further configured to configure the wireless AP device with an updated optimal configuration set corresponding to the monitored load condition, in response to the monitored load condition is lower than a load condition corresponding to a currently used optimal configuration set for a period of time, wherein the updated optimal configuration set corresponds to a set of configuration parameters corresponding to the minimum power consumption under the monitored load condition in the mapping table; and configure the wireless AP device with an updated optimal configuration set corresponding to a next higher level of load condition in the mapping table, in response to the monitored load condition is close to the highest load condition to which the currently used optimal configuration set is applicable, wherein the updated optimal configuration set corresponds to a set of configuration parameters corresponding to the minimum power consumption under the next higher level of load condition in the mapping table.

For example, if the control module 330 monitors (e.g., by the monitor module) that the load condition has lowered than a load condition corresponding to the currently configured configuration parameters in the mapping table, such as the number of client devices associated with the frequency band is reduced from 6 to 2, continuously for a predetermined time period, then updates the configuration parameters of the wireless AP device 300 to adapt to the variation of the load condition, that is, the wireless AP device 300 is configured, based on the mapping table, with the configuration parameters corresponding to the minimum power consumption under the current load condition.

Also, as mentioned above, a set of configuration parameters can be applicable to multiple load conditions. If the control module 330 monitors that the current load condition is close to the highest load condition to which the currently used optimal configuration set is applicable, then the control module 330 updates the configuration parameters of the wireless AP device 300 a set of configuration parameters corresponding to the minimum power consumption under a next higher level of load condition in the mapping table.

In some implementations, when one or more factors (e.g., a number of associated client devices, channel utilization rate or transmission rate) of the monitored load conditions have reached a specific percentage (e.g., 90%) of the upper limit condition corresponding to the currently used configuration parameters in the mapping table, the monitored load conditions can be determined to be close to the highest configuration.

For example, a wireless AP device is configured with a set of configuration parameters, as the currently used optimal configuration set, which may support wireless communication with a maximum of 6 associated client devices and a maximum transmission rate of 100Mbps. If it is monitored that 6 client devices have been associated with current band and the transmission rate has reached 90Mbps (that is, 90% of the maximum transmission rate), that is, the monitored load condition is close to the highest load condition to which the currently used parameters are applicable, and in response to this situation, the configuration of the wireless AP device is upgraded with an updated optimal configuration set corresponding to a next higher level of load condition in the mapping table, so that more client devices can access the frequency band or conduct the wireless communication at a higher transmission rate.

The wireless AP device according to the embodiment of the present disclosure has been described above. In a hardware design, one or more radio chips corresponding to different frequency bands are configured to be connected and powered by a power supply module controlled by a control module in response to a turn-on/off state of the frequency bands; and in a corresponding software design, a synchronization is established between the turn-on/off of the frequency band and the power supply state of the radio chip, so that when a specific frequency band is turned-off/on, the power supply for the respective radio chip can be disabled/enabled accordingly, and the radio chip corresponding to the turned-off band is powered off to realize energy saving. On the other hand, when one or more frequency bands are turned-on, the wireless AP device can dynamically adjust the configuration parameters according to the real-time variation of the load condition, so as to save power while maintaining a communication with an acceptable quality.

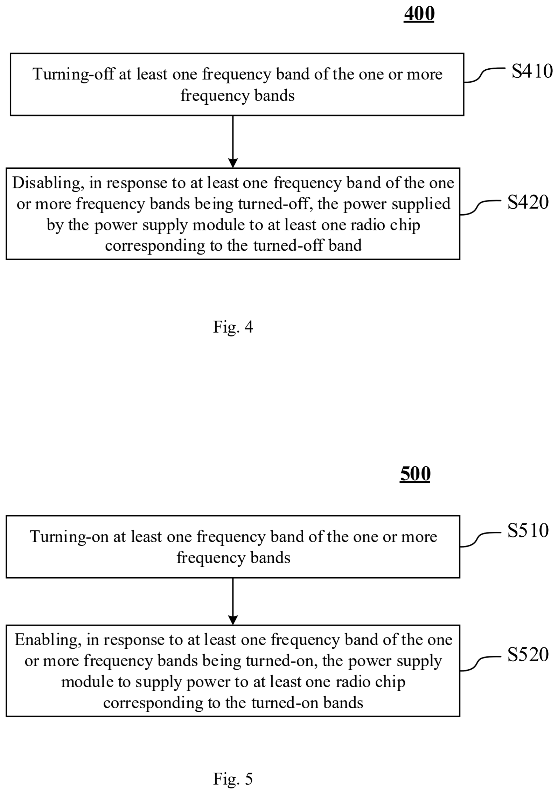

Figs. 4 and 5 are schematic flowcharts illustrating methods 400 and 500 for power management of a wireless AP device according to one embodiment of the present disclosure. The methods 400 and 500 correspond to a case of turning-off frequency bands and a case of turning-on frequency bands respectively, and may be implemented by the wireless AP device 300 in Fig. 3.

Referring to Fig. 4, method 400 corresponding to a case of turning-off frequency bands may include steps S410~S420.

At step S410, at least one frequency band of the one or more frequency bands are turned-off, for example, in response to a request to turn-off the frequency band from a user, as mentioned above.

According to an embodiment of the present disclosure, the method 400 further comprises monitoring client devices associated with a turned-on frequency band; and in response to that the frequency band is not associated with any client device, transmitting a message to recommend turning-off the frequency band, such as a prompt message to suggest user to turn-off one or more frequency bands, and therefore use can send the request to turn-off the frequency band based on the prompt message.

At step S420, in response to at least one frequency band of the one or more frequency bands being turned-off, the wireless AP device disables (e.g., by a control module) the power supplied by the power supply module to at least one radio chip corresponding to the turned-off band. According to an embodiment of the present disclosure, wherein the disabling the power supplied by the power supply module to at least one radio chip comprises performing, in response to a request to turn-off the one or more frequency bands, a first operation to unbind the at least one radio chip with a driver thereof, wherein the first operation is performed by calling a script containing an unbind instruction in response to the request, and disabling, in response to an execution of the unbind instruction, the power supplied by the power supply module to the at least one radio chip.

As mentioned above, in some implementations, the power supply module comprises one or more IO interfaces (e.g., GPIO interfaces) connected with the control module. According to an embodiment of the present disclosure, the method 400 further comprises associating the one or more IO interfaces with power supply states of the power supply module; and disabling the power supplied by the power supply module to the one or more radio chips corresponding to the turned-off band by setting logic levels at the one or more IO interfaces.

Next, referring to Fig. 5, the method 500 corresponding to a case of turning-on frequency bands may include steps S510~S520.

At step S510, at least one frequency band of the one or more frequency bands are turned-on.

At step S520, in response to at least one frequency band of the one or more frequency bands being turned-on, the wireless AP device enables (e.g., by a control module) the power supply module the power supply module to supply power to at least one radio chip corresponding to the turned-on bands, namely, the in-use radio chip.

According to an embodiment of the present disclosure, the method 500 further comprises monitoring a load condition corresponding to each of the turned-on bands, wherein the load condition includes one or more of a number of associated client devices, channel utilization rate or transmission rate; and configuring the wireless AP device with an optimal configuration set dynamically according to variation of the monitored load condition, wherein the optimal configuration set includes a set of configuration parameters corresponding to the minimum power consumption under a given load condition.

As mentioned above, in some implementations, the optimal configuration parameter set to be used can be determined based on a mapping table of load conditions and configuration parameters, wherein the mapping table includes a mapping relationship between different load conditions and respective optimal configuration sets. Also, according to an embodiment of the present disclosure, in order to obtain the optimal configuration parameter set, the method 500 further comprises obtaining multiple sets of configuration parameters corresponding to power consumptions by adjusting a set of configuration parameters from the highest configuration to lower configurations for one given load condition, until the adjusted set of configuration parameters does not meet the given load condition; determining, among the multiple sets of configuration parameters, a set of configuration parameters corresponding to the minimum power consumption under the given load condition as the optimal configuration set for the given load condition; and determining optimal configuration sets respectively for different load conditions to obtain the mapping table including the mapping relationship between the different load conditions and respective optimal configuration sets.

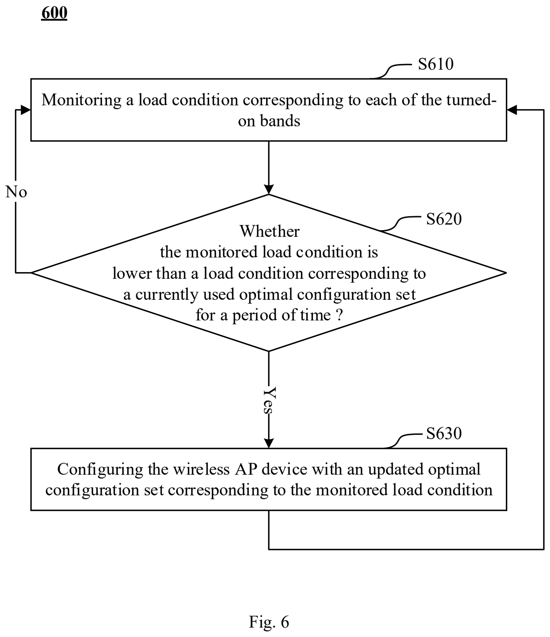

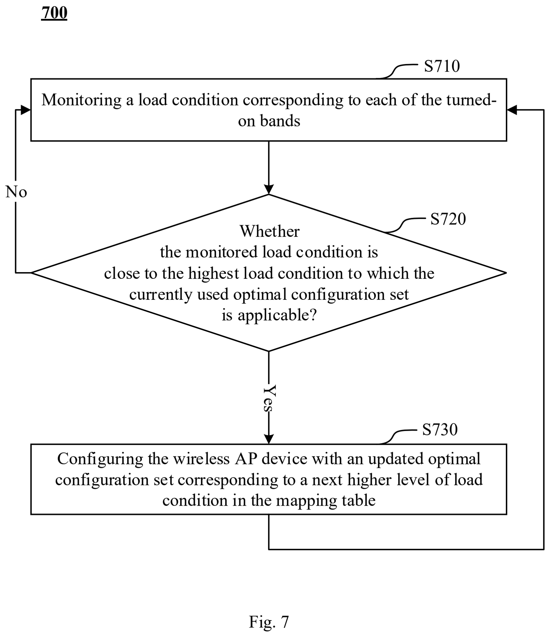

Figs. 6 and 7 are schematic flowcharts illustrating dynamic adjustment methods 600 and 700 for the configuration of the wireless AP device according to one embodiment of the present disclosure. The methods 600 and 700 correspond to a case of reducing and upgrading the configuration of the wireless AP device respectively, and may be implemented by the wireless AP device 300 in Fig. 3.

Referring to Fig. 6, method 600 corresponding to a case of reducing the configuration of the wireless AP device may include steps S610~S630.

At step S610, the wireless AP device monitors (e.g., by a monitor module) a load condition corresponding to each of the turned-on bands, wherein the load condition can include one or more of a number of associated client devices, channel utilization rate or transmission rate.

At step S620, in response to the monitored load condition is lower than a load condition corresponding to a currently used optimal configuration set for a period of time, then the method 600 proceeds to step S630, in which the wireless AP device is configured with an updated optimal configuration set corresponding to the monitored load condition, wherein the updated optimal configuration set corresponds to a set of configuration parameters corresponding to the minimum power consumption under the monitored load condition in the mapping table; and in response to the monitored load condition is not lower than a load condition corresponding to a currently used optimal configuration set for a period of time, then the method 600 returns to step S610, in which the wireless AP device keeps monitoring the load condition. In this manner, the configuration of the wireless AP device can be adapted to the variation of the load condition, so as to save power while maintaining a communication with an acceptable quality.

Next, referring to Fig. 7, method 700 corresponding to a case of upgrading the configuration of the wireless AP device may include steps S710~S730.

At step S710, the wireless AP device monitors a load condition corresponding to each of the turned-on bands.

At step S720, in response to the monitored load condition is close to the highest load condition to which the currently used optimal configuration set is applicable, then the method 700 proceeds to step S730, in which the wireless AP device is configured with an updated optimal configuration set corresponding to a next higher level of load condition in the mapping table, wherein the updated optimal configuration set corresponds to a set of configuration parameters corresponding to the minimum power consumption under the next higher level of load condition in the mapping table; and in response to the monitored load condition is not close to the highest load condition to which the currently used optimal configuration set is applicable, then the method 700 returns to step S710, in which the wireless AP device keeps monitoring the load condition. In this manner, the configuration of the wireless AP device can be upgraded adaptively, so that more client devices can access the frequency band or conduct the wireless communication at a higher transmission rate.

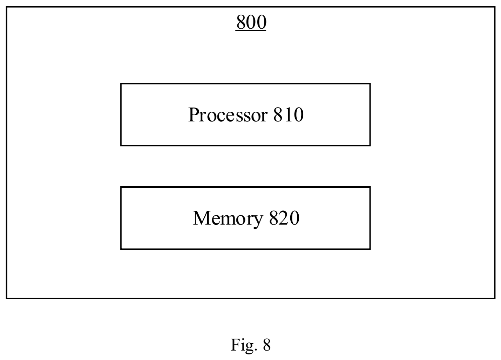

Fig. 8 is a schematic block diagram of a wireless AP device 800 according to one embodiment of the present disclosure. It should be noted that the wireless AP device 800 depicted in Fig. 8 may correspond to the wireless AP device 300 in Fig. 3 as described above and may be used to perform the methods for power management of the wireless AP device as described in the above with respect to methods 400, 500, 600 and 700.

As shown in Fig. 8, the wireless AP device 800 may comprise processor 810 and memory 820. Processor 810 and memory 820 may correspond to the CPU and the memory of the control module 330 as shown in the Fig. 3, and the processor 810 is communicatively coupled with the memory 820 and configured to perform steps in methods 400, 500, 600 and 700 as described above.

Examples of processor 810 comprise microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure.

Processor 810 may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on memory 820.

Memory 820 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read-only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. Memory 820 may reside in processor 810, external to processor 810, or distributed across multiple entities including processor 810. Memory 820 may be embodied in a computer program product.

In addition, according to another embodiment of the present disclosure, a computer program product for power management of a wireless AP device is disclosed. As an example, the computer program product comprises a non-transitory computer readable storage medium having program instructions embodied therewith, and the program instructions are executable by a processor. When executed, the program instructions cause the processor to perform one or more of the procedures above described, and details are omitted herein for conciseness. By way of example, a computer program product may include a computer-readable medium in packaging materials. Those skilled in the art will recognize how to implement the described functionality presented throughout this disclosure depending on the particular application and the overall design constraints imposed on the overall system.

The present disclosure may be a system, a method, and/or a computer program product at any possible technical detail level of integration. The computer program product may include a computer readable storage medium (or media) having computer readable program instructions thereon for causing a processor to carry out aspects of the present disclosure.

An expression such as "according to," "based on," "depend on," and so on as used in the disclosure does not mean "according only to," "based only on," or "dependent only on," unless it is explicitly otherwise stated. In other words, such expression generally means "according at least to," "based at least on," or "depend at least on" in the disclosure.

Any reference in the disclosure to an element using the designation "first," "second" and so forth is not intended to comprehensively limit the number or order of such elements. These expressions may be used in the disclosure as a convenient method for distinguishing two or more units. Thus, a reference to a first unit and a second unit does not imply that only two units may be employed or that the first unit must precede the second unit in some form.

The term "determining" used in the disclosure may include various operations. For example, regarding "determining," calculating, computing, processing, deriving, investigating, looking up (e.g., looking up in tables, databases, or other data structure), ascertaining, and so forth are regarded as "determination". In addition, regarding "determining," receiving (for example, receiving information), transmitting (for example, transmitting information), input, output, accessing (for example, access to data in the memory), and so forth, are also regarded as "determining". In addition, regarding "determining," resolving, selecting, choosing, establishing, comparing, and so forth may also be regarded as "determining." That is, regarding "determining," several actions may be regarded as "determining."

The terms such as "connected," "coupled" or any of their variants used in the disclosure refer to any connection or combination, direct or indirect, between two or more units, which may include the following situations: between two units that are "connected" or "coupled" with each other, there are one or more intermediate units. The coupling or connection between the units may be physical or logical or may also be a combination of the two. As used in the disclosure, two units may be considered to be electrically connected through the use of one or more wires, cables, and/or printed, and as a number of non-limiting and non-exhaustive examples, and are "connected" or "coupled" with each other through the use of electromagnetic energy with wavelengths in a radio frequency region, the microwave region, and/or in the light (both visible and invisible) region, and so forth.

When used in the disclosure or the claims 'including," "comprising," and variations thereof, these terms are as open-ended as the term "having". Further, the term "or" used in the disclosure or in the claims is not an exclusive-or.

It should be noted that the above description is only some embodiments of the present disclosure and an illustration of the applied technical principles. It should be understood by those skilled in the art that the present disclosure scope involved in the present disclosure is not limited to the technical solutions resulting from specific combinations of the above technical features, but also encompasses other technical solutions resulting from any combination of the above technical features or their equivalents without departing from the above disclosed concept, for example, the technical solutions formed by replacing between the above features and the technical features with similar functions disclosed in the present disclosure (but not limited hereto).

The present disclosure has been described in detail above, but it is obvious to those skilled in the art that the present disclosure is not limited to the embodiments described in the disclosure. The present disclosure may be implemented as a modified and changed form without departing from the spirit and scope of the present disclosure defined by the description of the claims. Therefore, the description in the disclosure is for illustration and does not have any limiting meaning to the present disclosure.

## Claims

1. A wireless access point (AP) device (300), comprising:
one or more radio chips (310), configured to transmit and receive electromagnetic waves for wireless communication on one or more frequency bands, wherein the one or more radio chips correspond to different frequency bands respectively;
a power supply module (320), configured to supply power to the one or more radio chips; and
a control module (330), configured to disable, in response to at least one frequency band of the one or more frequency bands being turned-off, the power supplied by the power supply module to at least one radio chip corresponding to the turned-off band.

2. The wireless AP device according to claim 1, wherein the power supply module comprises one or more IO interfaces connected with the control module; and
the control module is further configured to associate the one or more IO interfaces with power supply states of the power supply module, and disable the power supplied by the power supply module to the at least one radio chips corresponding to the turned-off band by setting logic levels at the one or more IO interfaces.

3. The wireless AP device according to claim 1, wherein to disable the power supplied by the power supply module to the at least one radio chip, the control module is configured to:
perform, in response to a request to turn-off the one or more frequency bands, a first operation to unbind the at least one radio chip corresponding to the turned-off band with a driver thereof; and
after the first operation is performed, disable the power supplied by the power supply module to the at least one radio chip.

4. The wireless AP device according to claim 3, wherein the first operation is performed by calling a script containing an unbind instruction.

5. The wireless AP device according to claim 1, wherein the control module is further configured to:
monitor client devices associated with a turned-on frequency band; and
transmit a message to recommend turning-off the frequency band, in response to that the frequency band is not associated with any client device.

6. The wireless AP device according to claim 1, wherein the control module is further configured to:
enable, in response to at least one frequency band of the one or more frequency bands being turned-on, the power supply module to supply power to at least one radio chip corresponding to the turned-on bands.

7. The wireless AP device according to claim 1, wherein to enable the power supply module to supply power to at least one radio chip corresponding to the turned-on bands, the control module is configured to:
associate the one or more IO interfaces with power supply states of the power supply module;
enable the power supplied by the power supply module to the at least one radio chip corresponding to the turned-on bands by setting logic levels at the one or more IO interfaces, in response to a notification for a second operation to bind the at least one radio chip corresponding to the turned-on band with a driver thereof.

8. The wireless AP device according to claim 6, wherein the control module is further configured to:
monitor a load condition corresponding to each of the turned-on bands, wherein the load condition includes one or more of a number of associated client devices, channel utilization rate or transmission rate; and
configure the wireless AP device with an optimal configuration set for the each of the turned-on bands dynamically according to variation of the monitored load condition, wherein the optimal configuration set includes a set of configuration parameters corresponding to the minimum power consumption under a given load condition.

9. The wireless AP device according to claim 8, wherein to configure the wireless AP device with the optimal configuration set, the control module is configured to:
determine the optimal configuration parameter set to be used, based on a mapping table of load conditions and configuration parameters, wherein the mapping table includes a mapping relationship between different load conditions and respective optimal configuration sets.

10. The wireless AP device according to claim 9, wherein the control module is further configured to:
in response to the monitored load condition is lower than a load condition corresponding to a currently used optimal configuration set for a period of time, configure the wireless AP device with an updated optimal configuration set corresponding to the monitored load condition; and
in response to the monitored load condition is close to the highest load condition to which the currently used optimal configuration set is applicable, configure the wireless AP device with an updated optimal configuration set corresponding to a next higher level of load condition in the mapping table.

11. A method for power management of a wireless AP device, wherein the wireless AP device comprises one or more radio chips, configured to transmit and receive electromagnetic waves for wireless communication on one or more frequency bands, wherein the one or more radio chips correspond to different frequency bands respectively, the method comprises:
disabling (S420), in response to at least one frequency band of the one or more frequency bands being turned-off, the power supplied by a power supply module to at least one radio chip corresponding to the turned-off band.

12. The method according to claim 11, wherein the power supply module comprises one or more IO interfaces connected with the control module, and the method comprises:
associating the one or more IO interfaces with power supply states of the power supply module; and
disabling the power supplied by the power supply module to the at least one radio chips corresponding to the turned-off band by setting logic levels at the one or more IO interfaces.

13. The method according to claim 11, wherein the disabling the power supplied by the power supply module to at least one radio chip comprises:
performing, in response to a request to turn-off the one or more frequency bands, a first operation to unbind the at least one radio chip corresponding to the turned-off band with a driver thereof, wherein the first operation is performed by calling a script containing an unbind instruction in response to the request.

14. The method according to claim 11, further comprising:
monitoring client devices associated with a turned-on frequency band;
transmitting a message to recommend turning-off the frequency band, in response to that the frequency band is not associated with any client device; and
enabling, in response to at least one frequency band of the one or more frequency bands being turned-on, the power supply module to supply power to at least one radio chip corresponding to the turned-on bands,
wherein the enabling the power supplied by the power supply module to at least one radio chip comprises:
associating the one or more IO interfaces with power supply states of the power supply module;
enabling the power supplied by the power supply module to the at least one radio chip corresponding to the turned-on bands by setting logic levels at the one or more IO interfaces, in response to a notification for a second operation to bind the at least one radio chip corresponding to the turned-on band with a driver thereof.

15. A computer program product for power management of a wireless AP device, wherein the wireless AP device comprises one or more radio chips, configured to transmit and receive electromagnetic waves for wireless communication on one or more frequency bands, wherein the one or more radio chips correspond to different frequency bands respectively, and a power supply module, configured to supply power to the one or more radio chips; and
the computer program product comprising a non-transitory computer readable storage medium having program instructions embodied therewith, and the program instructions executable by a processor of the wireless AP device to cause the wireless AP device to:
disable, in response to at least one frequency band of the one or more frequency bands being turned-off, the power supplied by the power supply module to at least one radio chip corresponding to the turned-off band.
